# EUROPEAN PATENT APPLICATION

(11) **EP 4 362 166 A2**
(43) Date of publication of application: **01.05.2024**
(21) Application number: 23198424.6
(22) Date of filing: 20.09.2023
(51) Int. Cl.: H01M 10/42, H01M 10/48, H01M 50/213, H01M 50/244, H01M 50/247, H01M 50/284, H01M 50/296

(54) **BATTERY PACK**

(30) Priority: 26.10.2022 CN 202211316830; 26.10.2022 CN 202211316811; 26.10.2022 CN 202211316828; 26.10.2022 CN 202222848232 U; 26.10.2022 CN 202222834580 U
(71) Applicant: Nanjing Chervon Industry Co., Ltd., Nanjing, Jiangsu 211106 (CN)
(72) Inventor: LIN, Xiaohong, Nanjing, Jiangsu (CN); ZHONG, Keqiong, Nanjing, Jiangsu (CN); LI, Jing, Nanjing, Jiangsu (CN); SHI, Pingbo, Nanjing, Jiangsu (CN); ZHANG, Yingdong, Nanjing, Jiangsu (CN)
(74) Representative: Sun, Yiming

(57) **Abstract**

A battery pack includes: a housing assembly; plurality of cells disposed in the housing assembly; a circuit board disposed in the housing assembly and connected to the plurality of cells; and at least two electrical terminals connected to the circuit board and configured to be coupled to an apparatus terminal on an external device when the battery pack is connected to the external device. The at least two electrical terminals include a Type-C terminal and a metal terminal fixed on a terminal block, where output power of the Type-C terminal is greater than 65 W, a power device for supplying power to the Type-C terminal is disposed on the circuit board, and the terminal block and the power device are disposed on the same mounting surface of the circuit board.

## Description

### TECHNICAL FIELD

The present application relates to an energy storage apparatus and, in particular, to a battery pack.

### BACKGROUND

A portable power tool is applicable in various scenarios of production and life. A rechargeable battery pack is configured to power the power tool so that the power tool is free from wires and more convenient for a user to use.

A conventional battery pack is generally designed to be capable of mating with a power interface of the power tool to power the power tool. However, in real life, the user may need the battery pack to power an electronic device such as a smartphone carried by the user.

### SUMMARY

In order that the deficiencies of the existing art are solved, an object of the present application is to provide a battery pack with better adaptability.

To achieve the preceding object, the present application adopts the technical solutions described below.

A battery pack includes: a housing assembly; plurality of cells disposed in the housing assembly; a circuit board disposed in the housing assembly and connected to the plurality of cells; and at least two electrical terminals connected to the circuit board and configured to be coupled to an apparatus terminal on an external device when the battery pack is connected to the external device. The at least two electrical terminals include a Type-C terminal and a metal terminal fixed on a terminal block, where output power of the Type-C terminal is greater than 65 W, a power device for supplying power to the Type-C terminal is disposed on the circuit board, and the terminal block and the power device are disposed on the same mounting surface of the circuit board.

In an example, the battery pack further includes a locking mechanism configured to be capable of fixing the battery pack on the external device and at least partially located on the upper side of the circuit board.

In an example, the power device is disposed on the circuit board between the locking mechanism and the terminal block.

In an example, output power of the Type-C terminal is greater than 65 W.

In an example, the power device is disposed on the circuit board in a space facing the locking mechanism and the terminal block.

In an example, a projection of the power device on the circuit board does not exceed a dimension of a projection of the terminal block on a plane where the circuit board is located along an extension line of a first direction.

In an example, the housing assembly includes an upper housing and a lower housing, and the distance from the inner surface of the upper housing facing the power device to the circuit board is greater than or equal to 12 mm and less than or equal to 15 mm.

In an example, the plurality of cells form a series of cell groups which are connected in parallel, and the height of the battery pack is less than 48 mm.

In an example, the plurality of cells form a series of cell groups in each of which two cells are connected in parallel, and the height of the battery pack is less than or equal to 67 mm.

In an example, the plurality of cells form a series of cell groups in each of which three cells are connected in parallel, and the height of the battery pack is less than or equal to 85 mm.

In an example, the battery pack further includes: a terminal indicator light disposed on the circuit board and used for indicating a connection state of an electrical terminal; and a support element configured to support the locking mechanism, where the support element is at least partially exposed outside the housing assembly, and at least part of the support element is a light-transmissive member for directing light of the terminal indicator light outside.

In an example, the support element is fixed on the housing assembly, and the terminal indicator light is disposed between the circuit board and the support element.

In an example, the support element is a plastic light-transmissive member.

In an example, the support element is at least partially exposed on at least one side of the battery pack.

In an example, the battery pack further includes at least one functional accessory detachably connected to the Type-C terminal or the housing assembly.

A battery pack includes: a housing assembly; plurality of cells disposed in the housing assembly; a circuit board disposed in the housing assembly and connected to the plurality of cells; and at least two electrical terminals connected to the circuit board and configured to be coupled to an apparatus terminal on an external device when the battery pack is connected to the external device. The at least two electrical terminals include a Type-C terminal and a metal terminal fixed on a terminal block, where a power device for supplying power to the Type-C terminal is disposed on the circuit board, and the terminal block and the power device are disposed on the same mounting surface of the circuit board.

A battery pack includes: a housing assembly; plurality of cells disposed in the housing assembly; a circuit board disposed in the housing assembly and connected to the plurality of cells; and at least two electrical terminals connected to the circuit board and configured to be coupled to an apparatus terminal on an external device when the battery pack is connected to the external device. The at least two electrical terminals include a Type-C terminal and a metal terminal fixed on a terminal block, where the discharge cut-off voltage of the Type-C terminal is higher than the discharge cut-off voltage of the metal terminal.

In an example, the Type-C terminal and the metal terminal are capable of outputting electrical energy simultaneously.

In an example, the Type-C terminal is incapable of inputting or outputting electrical energy when the metal terminal inputs the electrical energy.

In an example, the discharge cut-off voltage of the Type-C terminal is lower than or equal to 3 V, and the discharge cut-off voltage of the metal terminal is lower than or equal to 2.5 V.

The benefit is that the power device supplying the power to the Type-C terminal is disposed at a proper position on the circuit board so that the battery pack has better adaptability without the increase of the volume of the battery pack and is adaptable to power tools, intelligent terminal devices, or the like through different terminals.

### BRIEF DESCRIPTION OF DRAWINGS

FIG. 1 is a perspective view of a battery pack in an example;
FIG. 2 is a perspective view of a battery pack from another angle in an example;
FIG. 3 is a structural view of a battery pack with an upper housing removed in an example;
FIG. 4 is a front view of a battery pack with a housing assembly removed in an example;
FIG. 5 is a top view of a battery pack with a housing assembly removed in an example;
FIG. 6 is an exploded view of part of structures of a battery pack in an example;
FIG. 7 is a partial structural view of a battery pack in an example;
FIG. 8 is a partial structural view of a battery pack in an example;
FIG. 9 is a structural view of a functional accessory of a battery pack in an example;
FIG. 10 is a structural view showing a functional accessory of a battery pack in an example;
FIG. 11 is a schematic diagram of a battery management system of a battery pack in an example;
FIG. 12 is a schematic diagram of a battery management system of a battery pack in an example; and
FIG. 13 shows schematic views of some power tools applicable to the preceding battery pack in an example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

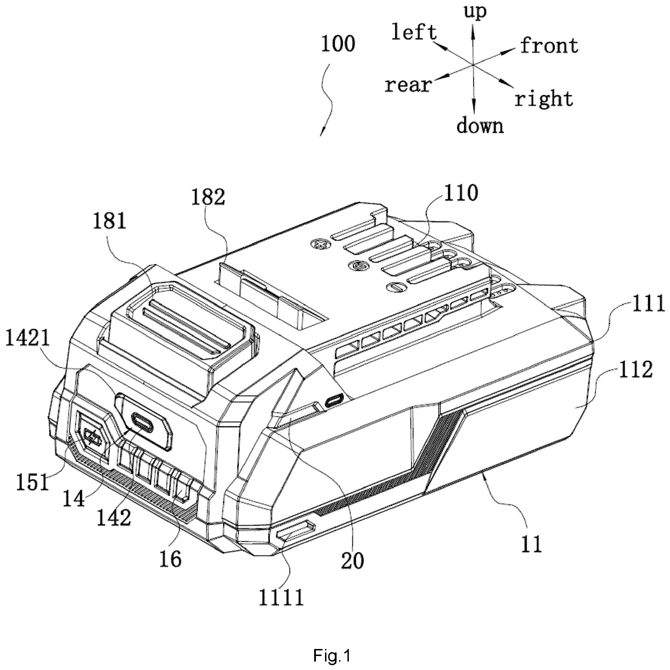

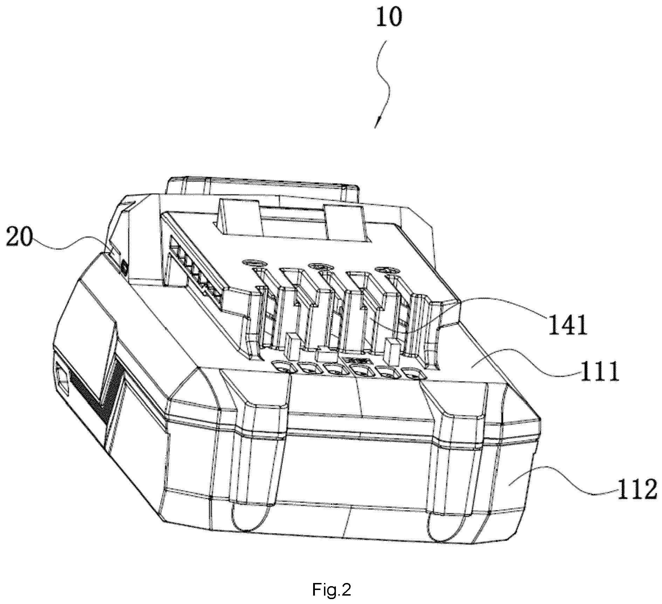

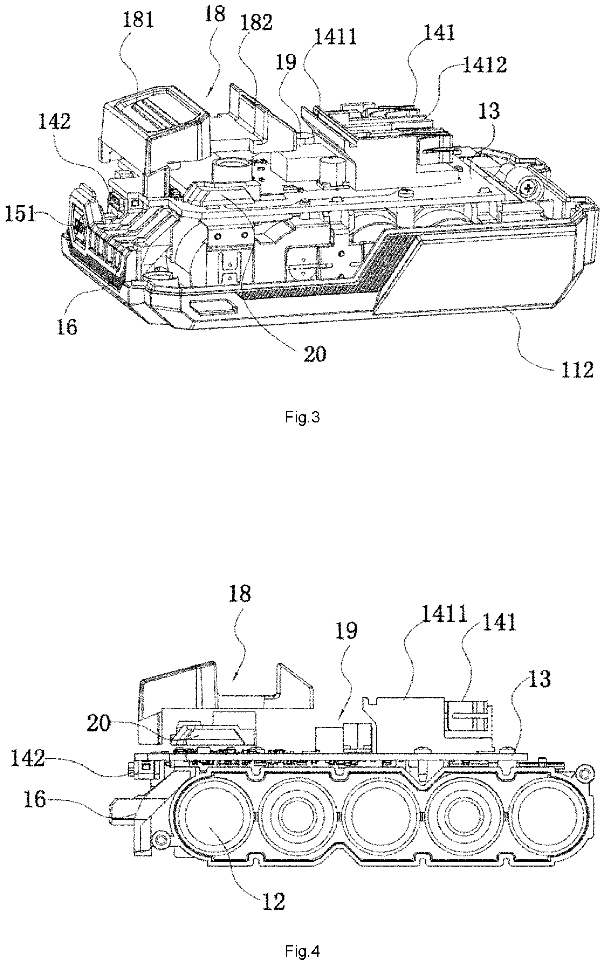

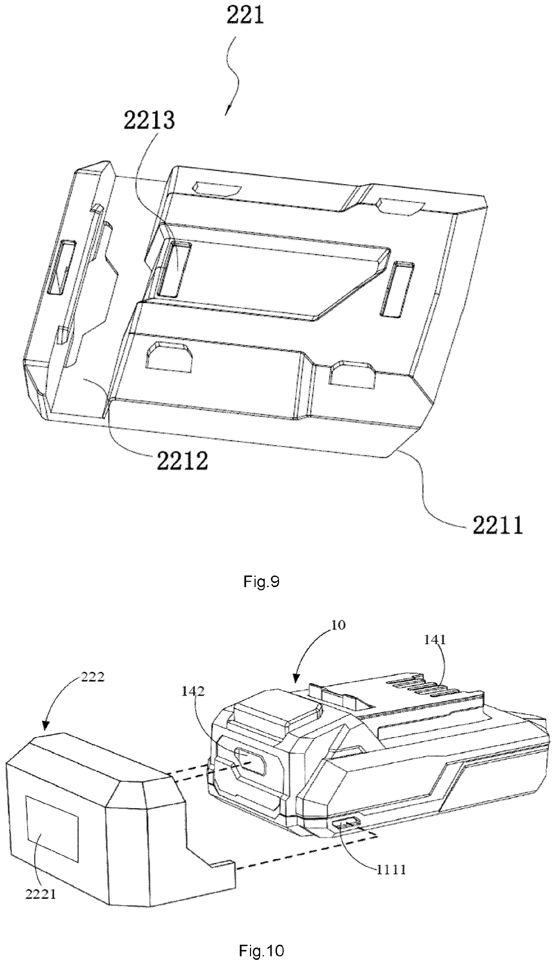

As shown in FIGS. 1 to 4, a battery pack 100 may include a battery pack body 10 and a functional accessory, the functional accessory may be a device holder 221 as shown in FIG. 9, or the functional accessory may be an illumination device 222 as shown in FIG. 10. The battery pack body 10 has a housing assembly 11 capable of accommodating plurality of cells 12. In this example, as shown in FIG. 4, the housing assembly 11 may include an upper housing 111 and a lower housing 112. The plurality of cells 12 in the housing assembly 11 may be connected in various manners. For example, when the plurality of cells 12 in the battery pack body 10 are connected in parallel such that a series of cell groups are formed, the battery pack 100 is a 1P battery pack; when every two of the plurality of cells 12 are connected in parallel such that a series of cell groups are formed, the battery pack 100 is a 2P battery pack; and when every three of the plurality of cells 12 are connected in parallel such that a series of cell groups are formed, the battery pack 100 is a 3P battery pack. A circuit board 13 is also accommodated in the housing assembly 11. The circuit board 13 is electrically connected to the cells 12. A parameter collection apparatus (not shown) collecting a parameter of a cell 12, a control unit controlling the charge and discharge of the cell 12, and the like may be disposed on the circuit board 13.

The battery pack body 10 further includes at least two electrical terminals 14. The electrical terminals 14 are electrically connected to the circuit board 13 and can be coupled to an apparatus terminal on an external device when the battery pack 10 is connected to the external device. The external device may include power tools and other household electric devices. In this example, electrical energy can be outputted to an external electric device by an electrical terminal 14 and the electrical energy may also be inputted by the electrical terminal 14 to charge the cells 12.

In this example, the electrical terminals 14 may include metal terminals 141 and Type-C terminals 142. A metal terminal 141 may also be referred to as a metal pin of the battery pack 100. In general, the metal terminal 141 may include at least a positive connection piece 141a and a negative connection piece 141b, where the positive connection piece 141a and the negative connection piece 141b are adaptable to a tool terminal on a corresponding power tool to output the electrical energy to the tool. In an example, the metal terminal 141 may also include a communication connection piece 141c, where the communication connection piece 141c is adaptable to a communication terminal on the corresponding power tool to transmit communication data between the battery pack 100 and the power tool. As shown in FIG. 3, a terminal block 1411 is disposed on the circuit board 13 to fix the metal terminals 141. The terminal block 1411 is provided with baffles 1412 for electrical isolation so that it can be ensured that a certain creepage distance exists between the metal terminals 141. In some examples, as shown in FIG. 1, the housing assembly 11 is provided with a first opening 110. A corresponding electrical terminal of an apparatus, an electronic device, or a power tool powered by the battery pack 100 can be coupled to the metal terminal 141 through the first opening 110. In this example, the first opening 110 may be disposed at the upper end of the battery pack body 10. In other examples, the first opening 110 may be disposed at the lower end, the front end, the rear end, the left end, or the right end of the battery pack body 10. In this example, the corresponding electrical terminal of the apparatus, the electronic device, or the power tool powered by the battery pack 100 may be referred to as a tool terminal, an apparatus terminal, or a device terminal.

A Type-C terminal 142 may be a standard Type-C interface. This interface is coupled to the cells 12 via a universal serial bus (USB) communication protocol controller (not shown). In this example, the Type-C terminal 142 may support USB power delivery specifications implemented on the Type-C interface. For example, the following USB protocols can be supported: USB 2.0, USB 3.1, USB 3.2, and USB 4. In some examples, the USB power delivery specifications implemented on the Type-C interface may also include the USB PD protocol. In this example, output power of the Type-C terminal 142 is greater than 65 W. For example, the output power may be 70 W, 75 W, 80 W, or 100 W. In an example, the output power of the Type-C terminal 142 is substantially 100 W.

In this example, the Type-C terminal 142 is disposed at the front end of the battery pack body 10. As shown in FIGS. 1 to 4, at least part of the Type-C terminal 142 is exposed on the front side of the upper housing 111. In an example, the Type-C terminal 142 is disposed on the back of the circuit board 13.

In some examples, a Type-C terminal dust cap 1421 may be provided to prevent the portion of the Type-C terminal 142 exposed outside the housing assembly 11 from being affected by dirt, dust, and the like. The Type-C terminal dust cap 1421 is movably connected to the housing assembly 11 and is capable of exposing or not exposing the Type-C terminal 142 as desired by a user.

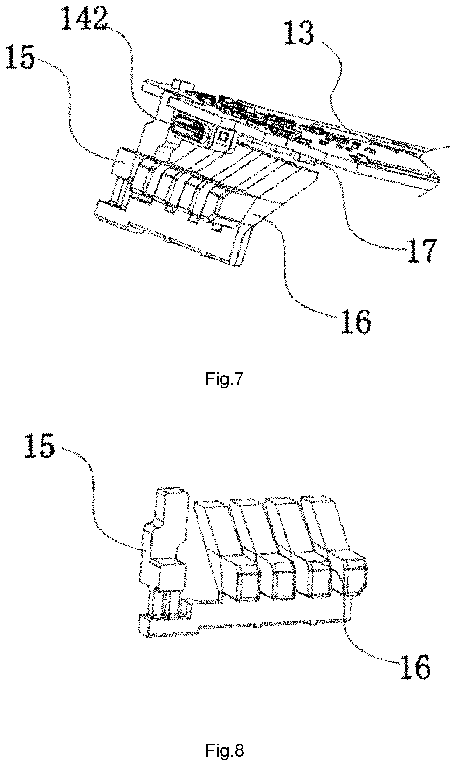

As shown in FIGS. 7 and 8, the battery pack body 10 further includes a battery switching member 15 configured to be capable of being triggered by a user to enable the charge/discharge function of the Type-C terminal 142, to enable the charge/discharge function of the metal terminal 141, or to enable the charge/discharge function of the Type-C terminal 142 and the charge/discharge function of the metal terminal 141 simultaneously. In this example, electric quantity indicator lights 17 are also disposed on the circuit board 13. An electric quantity indicator light 17 can indicate the electric quantity of the battery pack 100. In order that the light of the electric quantity indicator lights 17 is directed out of the battery pack 100 to be seen by the user, the battery pack body 10 further includes light directing columns 16. A light directing column 16 is at least partially exposed outside the housing assembly 11 and is at least partially close to a respective electric quantity indicator light 17. In this example, the battery switching member 15 and the light directing columns 16 are integrally formed and are disposed at the front end of the battery pack body 10. For example, the battery switching member 15 and the light directing columns 16 are exposed on the lower side of the Type-C terminal 142. In an example, the battery switching member 15 may also be used as an electric quantity display member, which can display the electric quantity of the battery pack 100 when the battery switching member 15 is triggered. In this example, the function of the battery switching member 15 and the function of the light directing columns 16 are integrated on one component so that the Type-C terminal 142 can be activated through the operation of the battery switching member 15 to discharge electricity, the electric quantity of the battery pack 100 can be viewed, and components disposed in the battery pack 100 are reduced.

In this example, a key 151 is further disposed at the outer end of the battery switching member 15 so that the user identifies the battery switching member 15. Typically, the key 151 is made of a soft silica gel so that the user can have a comfortable touch. In addition, the key 151 can perform a dustproof function.

In an example, the battery switching member 15 and the light directing columns 16 have certain light transmittance. In order to prevent the battery switching member 15 from being mistaken as the light directing column 16, a light-shielding support element is disposed at the front end of the battery switching member 15 so that the user can distinguish an electric quantity display column from the switching member.

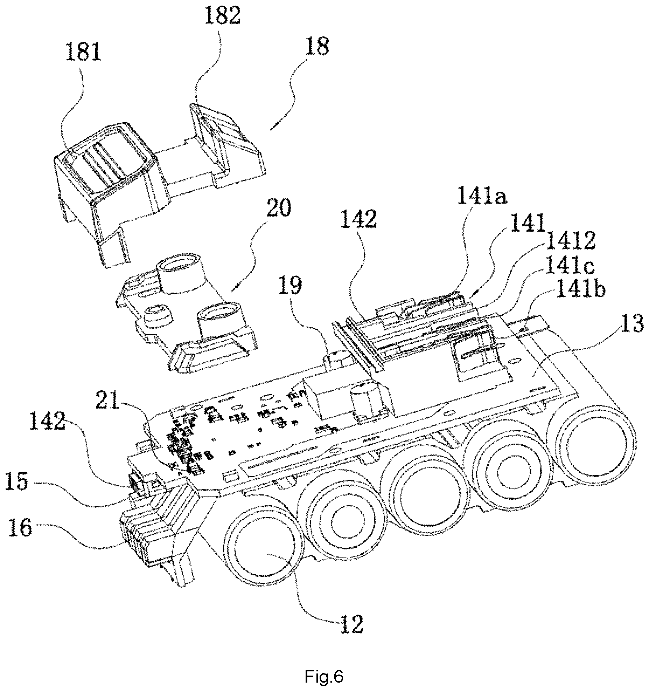

As shown in FIGS. 1 to 6, a locking mechanism 18 is further disposed on the battery pack body 10. The locking mechanism 18 is configured to be capable of fixing the battery pack body 10 on the external device. In this example, the locking mechanism 18 is at least partially located on the circuit board 13, and the locking mechanism 18 is mostly located on the circuit board 13 so that the compactness of the overall structure can be ensured. In this example, the locking mechanism 18 may include a pressing portion 181 and a locking portion 182. The pressing portion 181 and the locking portion 182 are exposed on the outside of the upper housing 111, and the pressing portion 181 may be pressed by the user with a hand. The locking portion 182 has a substantially wedge-shaped structure. When the battery pack 100 is mounted to the power tool, the locking portion 182 can be fixed to a retention portion in the tool so that the battery pack 100 is fixed on the power tool. When the user operates the pressing portion 181, the locking portion 182 can be unlocked from the retention portion in the tool so that the battery pack 100 is detachable from the power tool.

In this example, a power device 19 for supplying power to the Type-C terminal 142 is disposed on the circuit board 13. Since the Type-C terminal 142 has relatively high output power, generally greater than 65 W, the power device 19 also has a relatively large volume. In order not to increase the volume of the battery pack body 10, the example of the present application has a strict requirement on the position of the power device 19 on the circuit board 13.

In an example, the power device 19 is disposed on the circuit board 13 between the terminal block 1411 and the locking mechanism 18, which can make full use of the remaining space on the circuit board 13 without increasing the volume of the battery pack body 10. The power device 19, the terminal block 1411, and the locking mechanism 18 are disposed on the same surface of the circuit board 13. Generally, the power device 19, the terminal block 1411, and the locking mechanism 18 are disposed on the front surface of the circuit board 13 or the upper surface of the circuit board 13, that is, a surface facing away from the cells 12. In this example, the power device 19 may be a capacitor or an inductor.

In an example, the distance from the inner surface of the upper housing 111 facing the power device 19 to the circuit board 13 is greater than or equal to 12 mm and less than or equal to 15 mm, for example, 12 mm, 13 mm, 14 mm, or 15 mm.

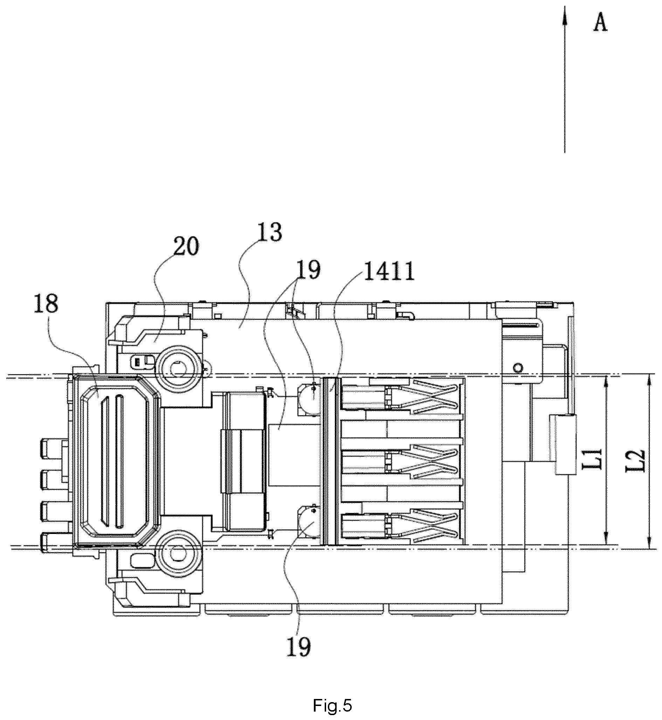

In an example, the power device 19 is disposed on the circuit board 13 in a space facing the terminal block 1411 and the locking mechanism 18. It is to be understood that as shown in FIG. 5, the dimension of a projection of the terminal block 1411 on the plane where the circuit board 13 is located along an extension line of a first direction A is L1, and the dimension of a projection of the locking mechanism 18 on the plane where the circuit board 13 is located along the extension line of the first direction A is L2. Then, the width of a projection of the power device 19 on the plane where the circuit board 13 is located does not exceed L1 or L2. In this example, the height of the power device 19 does not exceed the height of the terminal block 1411 or the height of the locking mechanism 18. That is to say, in a left-right direction, a projection of the power device 19 on the circuit board 13 does not exceed a projection of the terminal block 1411 on the circuit board 13. In the left-right direction, the projection of the power device 19 on the circuit board 13 does not exceed a projection of the locking mechanism 18 on the circuit board 13.

In this example, when the battery pack 100 is the 1P battery pack, the overall height of the battery pack body 10 in an up-down direction is less than 48 mm, for example, 47 mm, 46 mm, or 45 mm. When the battery pack 100 is the 1P battery pack, the plurality of cells 12 form a 1P battery cell group, and the plurality of cells 12 are connected in series.

In an example, when the battery pack 100 is the 2P battery pack, the overall height of the battery pack body 10 in the up-down direction is less than or equal to 67 mm, for example, 67 mm, 66 mm, or 65 mm. When the battery pack 100 is the 2P battery pack, the plurality of cells 12 form a 2P battery cell groups, each two cells of the plurality of cells 12 are connected in parallel to form a group, and the groups are connected in series. Or, when the battery pack 100 is the 2P battery pack, the plurality of cells 12 form a 2P battery cell groups, the plurality of cells 12 are divided into two groups, the cells in each group are connected in series, and the two groups are connected in parallel.

In an example, when the battery pack 100 is the 3P battery pack, the overall height of the battery pack body 10 in the up-down direction is less than or equal to 85 mm, for example, 85 mm, 84 mm, or 83 mm. When the battery pack 100 is the 3P battery pack, the plurality of cells 12 form a 3P battery cell groups, each three cells of the plurality of cells 12 are connected in parallel to form a group, and the groups are connected in series. Or, when the battery pack 100 is the 3P battery pack, the plurality of cells 12 form a 3P battery cell groups, the plurality of cells 12 are divided into three groups, the cells in each group are connected in series, and the three groups are connected in parallel.

It is to be noted that the battery pack body 10 is the battery pack 100 and the height of the battery pack body 10 is the height of the battery pack 100 when the battery pack 100 is provided with no functional accessory.

In this example, a support element 20 capable of supporting the locking mechanism 18 is disposed between the locking mechanism 18 and the circuit board 13. That is to say, the locking mechanism 18 and the circuit board 13 may not be in direct contact with each other so that the user can be prevented from affecting the connection stability of electronic components on the circuit board 13 by the frequent operation of the locking mechanism 18, thereby ensuring the service life of the circuit board 13. In an example, the support element 20 is fixed on the upper housing 111, an elastic member (not shown) is disposed between the support element 20 and the locking mechanism 18, and the elastic member can be deformed in the case where the pressing portion 181 is operated, thereby ensuring that the locking mechanism 18 locks the battery pack 100 on the power tool or releases the battery pack 100 from the power tool.

In this example, the width of the support element 20 along the extension line of the first direction A is greater than the width of the circuit board 13 in the first direction. At least one end of the support element 20 is at least partially exposed outside the housing assembly 11 so that the user can directly view the existence of the support element 20 from the outside of the battery pack body 10. In this example, two ends of the support element 20 are symmetrically exposed on two sides of the battery pack 10.

In this example, a terminal indicator light 21 is also disposed on the circuit board 13. The terminal indicator light 21 can indicate the connection state of at least one electrical terminal. For example, the terminal indicator light 21 can indicate whether the Type-C terminal 142 is connected to the electronic device, whether only the metal terminal 141 is connected to the power tool, or the like. In an example, the terminal indicator light 21 may be a light-emitting diode (LED) light electrically connected to the circuit board 13 or may be another light-emitting element capable of emitting light. In an example, the portion of the Type-C terminal 142 exposed outside the housing assembly 11 is located on the front side of the terminal indicator light 21.

Since the terminal indicator light 21 is disposed in an upper row of the circuit board 13 and located in the housing assembly 11, light emitted from the terminal indicator light 21 is not easily directed to the outside. In this example, the terminal indicator light 21 may be disposed on the circuit board 13 below the support element 20, and the support element 20 may be a light-transmissive member so that the light of the terminal indicator light 21 can be directed to the outside. In an example, the support element 20 may be a transparent plastic member or a light-transmissive member of another material. In an example, the support element 20 is at least partially light-transmissive. For example, at least part of the support element 20 exposed outside the housing assembly 11 is light-transmissive.

As shown in FIG. 9, the battery pack 100 may further include at least one functional accessory . The functional accessory can be detachably connected to the battery pack body 10. When needed, the functional accessory may provide some convenient auxiliary functions for the battery pack body 10, and when not needed, the functional accessory is removed from the battery pack body 10 to lighten the load of the battery pack 100. In an example, the functional accessory may include a configuration which supports the delivery of the electrical energy through the Type-C terminal 142. This configuration may be an electrical energy delivery portion (not shown) capable of delivering the electrical energy. In an example, the functional accessory may further include a physical connection portion (not shown) physically connectable to the housing assembly 11. Correspondingly, a coupling portion 1111 connected to the physical connection portion is disposed on the housing assembly 11. In an example, the physical connection portion may include a snap-fit structure, which can be a snap-fit into the coupling portion 1111. In other examples, a physical connection may refer to a structural connection in another form such as a screw connection or a pluggable connection.

In an example, as shown in FIG. 9, the functional accessory may be the device holder 221 having a support portion and capable of supporting other electronic devices powered by the battery pack 100. For example, like a holder of a mobile phone, the device holder 221 is detachably mounted on the battery pack body 10. While being charged by the battery pack 100 through a Type-C port, the mobile phone may be placed on the holder to be used by the user. In an example, the functional accessory may be a hanger or the like to which the battery pack body 10 is hung. In this example, the device holder 221 does not include the electrical energy delivery portion. In an example, the device holder 221 may be provided with a slide rail 2211 which mates with a slide groove (not shown) on the upper housing 111 of the battery pack 100 to slide into and be mounted on the battery pack 100. In this example, electric devices such as the mobile phone can be placed on the support portion 2212 on the device holder 221. The support portion 2212 may be used as a hook for hanging the battery pack 100. In this example, the device holder 221 is further provided with a second opening 2213. Thus, the device holder 221 can mate with the locking mechanism 18 to be fixed on the battery pack 100 or removed from the battery pack 100.

In an example, in addition to the physical connection portion physically connectable to the housing assembly 11, the functional accessory may further include the electrical energy delivery portion electrically connectable to the Type-C terminal 142. That is to say, the functional accessory is fixed on the battery pack body 10 by a physical connection structure and can be powered by the Type-C terminal 142 to work. The functional accessory shown in FIG. 10 may be the illumination device 222. In an example, the illumination device 222 may be formed with a mounting surface surrounding at least one surface of the battery pack body 10. The electrical energy delivery portion electrically connectable to the Type-C terminal 142 may be disposed on the inner side of the mounting surface. The electrical energy delivery portion is oppositely connectable to the Type-C terminal 142. That is, no intermediate connection wire may be disposed between the electrical energy delivery portion and the Type-C terminal 142 so that there is a relatively small gap or no gap between the illumination device 222 and the battery pack body 10 after the illumination device 222 is electrically connected to the battery pack body 10, thereby obtaining the battery pack 100 with a substantially integrated appearance. In this example, a light-emitting assembly 2221 may be disposed on the outer side of the mounting surface. The light-emitting assembly 2221 may be one or more light arrays formed by LED lights.

In some examples, the functional accessory may be a fan or the like.

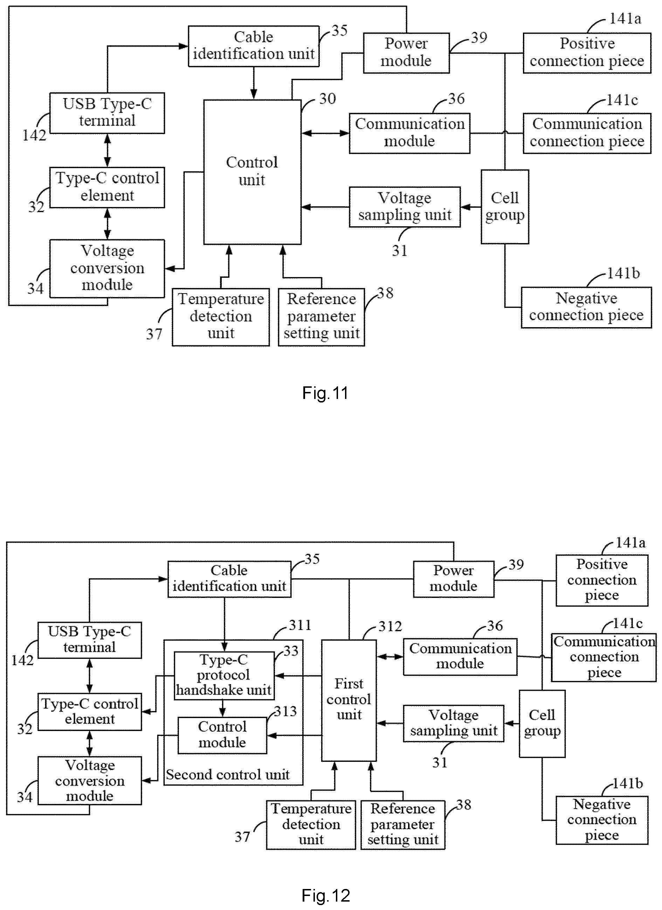

In an example, as shown in FIG. 11, a charge and discharge management system in the battery pack 100 includes one control unit 30. The control unit 30 can control power of the Type-C terminal 142 and can also control the charge/discharge of the metal terminal 141. That is to say, the control unit 30 is integrated with at least a control module for controlling the charge and discharge of the Type-C terminal and a control module for controlling the charge and discharge of the metal terminal 141. In this example, the control unit 30 is connected to a voltage sampling unit 31 capable of collecting the voltage of a single cell 12. According to the voltage of the single cell 12, the control unit 30 may control the Type-C terminal 142 to charge, discharge, or stop working and may control the metal terminal 141 to charge, discharge, or stop delivering the electrical energy. In an example, the voltage sampling unit 31 may be integrated in the control unit 30, that is to say, the control unit 30 may collect the voltage of the single cell 12. In an example, a control strategy depends on the voltage of the cell 12. When the minimum voltage of the single cell 12 is lower than a first threshold voltage, the control unit 30 forbids the Type-C terminal 142 or the metal terminal 141 from charging or discharging the cell 12. When the minimum voltage of the single cell 12 is higher than or equal to the first threshold voltage and lower than a second threshold voltage, the control unit 30 allows the Type-C terminal 142 or the metal terminal 141 to charge the cell 12 but forbids the Type-C terminal 142 or the metal terminal 141 from discharging the cell 12. When the minimum voltage of the single cell 12 is higher than or equal to the second threshold voltage and lower than a third threshold voltage, the control unit 30 allows the Type-C terminal 142 or the metal terminal 141 to charge or discharge the cell 12. When the minimum voltage of the single cell 12 is higher than or equal to the third threshold voltage, the control unit 30 allows the Type-C terminal 142 or the metal terminal 141 to discharge the cell 12 but forbids the Type-C terminal 142 or the metal terminal 141 from charging the cell 12. Typically, the relationship among the first threshold voltage, the second threshold voltage, and the third threshold voltage is that the first threshold voltage is lower than the second threshold voltage, and the second threshold voltage is lower than the third threshold voltage. In an example, a charge control strategy depends on the temperature of the cell 12. When the temperature of the cell 12 is lower than a first threshold temperature, the control unit 30 forbids the Type-C terminal 142 or the metal terminal 141 from charging the cell 12. When the temperature of the cell is higher than or equal to the first threshold temperature and lower than a second threshold temperature, the control unit 30 allows the Type-C terminal 142 or the metal terminal 141 to charge the cell 12 with a relatively small current. When the temperature of the cell is higher than or equal to the second threshold temperature and lower than a third threshold temperature, the control unit 30 allows the Type-C terminal 142 or the metal terminal 141 to charge the cell 12 with a relatively large current. When the temperature of the cell is higher than or equal to the third threshold temperature, the control unit 30 forbids the Type-C terminal 142 or the metal terminal 141 from charging the cell 12. Typically, the relationship among the first threshold temperature, the second threshold temperature, and the third threshold temperature is that the first threshold temperature is lower than the second threshold temperature, and the second threshold temperature is lower than the third threshold temperature.

In an example, the control unit 30 may collect the voltages of all the single cells 12 and may determine, according to differences between the voltages of all the cells or the average of the voltages of all the cells, whether the working state or the working mode of the electrical terminal 14 which is working currently is changed, where the working state may include the charge/discharge state or the state where the charge/discharge is stopped, and the working mode may include a charge mode or a discharge mode. In an example, the control unit 30 may also control the charge/discharge rate of the corresponding electrical terminal 14 according to the voltage of the single cell 12.

In this example, the control unit 30 may be connected to a Type-C control element 32. In an example, the Type-C control element 32 may be a power switch. The power switch has multiple switching states corresponding to the electrical energy delivery states of the Type-C terminal 142. For example, when the Type-C control element 32 is turned on, the Type-C terminal 142 can input or output the electrical energy; and when the Type-C control element 32 is turned off, the Type-C terminal 142 cannot deliver the electrical energy. That is to say, the control unit 30 may control the conduction state of the Type-C control element 32 to control the Type-C terminal 142 to charge, discharge, or not to work.

In this example, a Type-C protocol handshake unit may also be integrated in the control unit 30. The Type-C protocol handshake unit can perform protocol matching with an external electric apparatus accessed by the Type-C terminal 142 to determine whether the electrical energy can be delivered between the Type-C terminal 142 and the external electric apparatus. In this example, the Type-C protocol handshake unit may control the conduction state of the Type-C control element 32, thereby controlling the Type-C terminal 142 to charge, to discharge, or not to work.

In this example, the Type-C protocol handshake unit may determine, according to both a protocol handshake result and a control instruction of the control unit 30, whether the Type-C control element 32 is turned on. That is to say, even if the Type-C protocol of the external electric device is adaptable to the protocol of the Type-C terminal 142 in the present application, the Type-C terminal 142 can not necessarily deliver the electrical energy.

In an example, during the discharge of the Type-C terminal 142, the control unit 30 may detect the electric quantity information of the battery pack 10, and when the electric quantity of the battery pack 10 is less than or equal to an electric quantity threshold, the control unit 30 controls the Type-C protocol handshake unit to change the working mode of the Type-C terminal 142 to the charge mode, so as to prevent the Type-C terminal 142 from causing the battery pack 100 to overdischarge due to continuous electrical energy output.

In an example, a voltage conversion module 34 may also be disposed between the Type-C control element 32 and the control unit 30. The voltage conversion module 34 can perform step-up processing or step-down processing on the electrical energy inputted into the Type-C terminal 142 or can perform step-down processing or step-up processing on the electrical energy and then deliver the electrical energy to the Type-C terminal 142 for output. In other words, a voltage outputted by the Type-C terminal 142 is variable and adaptively adaptable to electric devices of different nominal voltages. For example, both a mobile phone whose nominal voltage is 3.6 V or 3.7 V and a laptop whose nominal voltage is about 14 V may be powered by the Type-C terminal 142.

In an example, a cable identification unit 35 may also be disposed on the circuit board 13. The unit may be disposed between the Type-C terminal 142 and the control unit 30 and can identify the type of a power cord connected to the Type-C terminal 142. Thus, the control unit 30 can control, according to the type of the power cord identified by the cable identification unit 35, whether the electrical energy is delivered by the Type-C terminal 142.

In this example, the charge and discharge management system further includes a communication module 36. The communication module 36 is connectable to the communication connection piece of the metal terminal 141 to transmit the communication data of the battery pack 100 or the communication data of the external electric device to the control unit 30. For example, parameters such as the temperature or attribute of the battery pack 100 can be transmitted, or a functional characteristic parameter of the external electric device can be transmitted. A temperature detection unit 37 can detect the temperature of the circuit board 13, the temperature of the cell 12, the temperature of another component, the ambient temperature in the battery pack 10, or the like. A reference parameter setting unit 38 may set some reference voltages, reference currents, reference temperatures, and the like. Thus, when the control unit 30 performs the charge and discharge control, the overtemperature, overdischarge, overcharge, or the like of the battery pack 100 by which the battery pack 100 or the external electric apparatus may be damaged is avoided. In an example, a control switch capable of controlling the control unit 30 to be powered on may further be included. The control switch may be triggered by the user so that the control unit 30 is powered on or off, thereby enabling the battery pack 10 to work normally or not to work.

In this example, the charge and discharge management system may also include a power module 39. The power module 39 can convert the electrical energy of a cell group to low-voltage electrical energy to power the components on the circuit board 13. It is to be noted that not all of the components which need to be powered by the power module 39 are wired in FIG. 11 on the premise that the understanding of the charge and discharge management system of the battery pack 10 is not affected.

In an example, the charge and discharge management system in the battery pack 100 is shown in FIG. 12, and some of functional modules are consistent with those in the preceding example. The details are not repeated here. In this example, the charge and discharge management system may include a first control unit 312 capable of controlling the charge and discharge of the metal terminal 141 and a second control unit 311 capable of controlling the charge and discharge of the Type-C terminal 142. That is to say, the battery pack management system performs a charge and discharge control on the two electrical terminals 14 separately. In this example, the voltage sampling unit 31 may be integrated in the first control unit 311 or the second control unit 311, or the voltage sampling unit 31 may be disposed in each of the two control units so that the voltage of the single cell 12 can be collected.

In this example, the second control unit 311 may include a Type-C protocol handshake unit 33 and a control module 313. The Type-C protocol handshake unit 33 can perform the protocol matching with the external electric apparatus accessed by the Type-C terminal 142 to determine whether the electrical energy can be delivered between the Type-C terminal 142 and the external electric apparatus. In this example, the Type-C protocol handshake unit 33 may control the conduction state of the Type-C control element 32, thereby controlling the Type-C terminal 142 to charge, to discharge, or not to work. The control module 313 can control the voltage conversion module 34 to perform the step-up processing or step-down processing on the electrical energy inputted into or outputted from the battery pack 100.

In this example, the first control unit 311 can output control information to the Type-C protocol handshake unit 33 so that the Type-C protocol handshake unit 33 works normally or stops working. If the Type-C protocol handshake unit 33 stops working, the Type-C terminal 142 also stops delivering the electrical energy. That is to say, the first control unit 311 can also control the charge and discharge of the Type-C terminal 142.

In this example, the Type-C terminal 142 and the metal terminal 141 have different discharge cut-off voltages. Generally, the discharge cut-off voltage of the Type-C terminal 142 is higher than the discharge cut-off voltage of the metal terminal 141 so that a temperature rise during the discharge of the Type-C terminal 142 can be reduced and the deep discharge of the battery pack 100 can be avoided. In an example, the ratio of the discharge cut-off voltage of the Type-C terminal 142 to the discharge cut-off voltage of the metal terminal 141 is higher than 1.1, for example, 1.2 or 1.3.

In this example, the two control units may control the charge and discharge sequence of the Type-C terminal 142 and the metal terminal 141. In an example, the Type-C terminal 142 and the metal terminal 141 may simultaneously discharge the electricity to different electric devices. For example, the battery pack 100 charges the mobile phone through the Type-C terminal 142 while the power tool can also obtain the electrical energy from the battery pack 100 through the metal terminal 141.

In an example, the metal terminal 141 may access a charger to perform the charge when the Type-C terminal 142 accesses the electric device to power the electric device. In this example, when the two terminals access external devices separately, the two terminals may alternately work. For example, after the metal terminal 141 preferentially charges the battery pack 100 for a period of time, the Type-C terminal 142 discharges the electricity to the electric device, and the two terminals alternately work in sequence until the discharge or charge of one terminal ends. In this example, even if the two terminals access the external devices separately, the metal terminal 141 may be used for charging the battery pack 100, and the Type-C terminal 142 cannot output the electrical energy to power the external device until the charge of the battery pack 100 ends.

In an example, the metal terminal 141 may access the electric device such as the power tool to power the electric device when the Type-C terminal 142 accesses the charger to charge the battery pack 100. In this example, when the two terminals access the external devices separately, the two terminals may alternately work. For example, after the metal terminal 141 preferentially discharges the electricity to the electric device for a period of time, the Type-C terminal 142 charges the battery pack 100, and the two terminals alternately work in sequence until the discharge or charge of one terminal ends. In this example, even if the two terminals access the external devices separately, the metal terminal 141 may be used for discharging the electricity, and the Type-C terminal cannot input the electrical energy to charge the battery pack 100 until the discharge of the metal terminal 141 ends.

In an example, the Type-C terminal 142 and the metal terminal 141 may charge the battery pack 100 by accessing different types of chargers simultaneously. In this example, when the two terminals each access the charger, the metal terminal 141 preferentially charges the battery pack 100. If the metal terminal 141 can charge the battery pack 100 to full charge, the Type-C terminal 142 no longer charges the battery pack 100. If there is a problem with the metal terminal 141 during the charge, the battery pack 100 is charged by the Type-C terminal 142.

That is to say, when the Type-C terminal 142 and the metal terminal 141 each access the device, the metal terminal 141 preferentially works regardless of whether the two terminals perform a charge function or a discharge function.

In an example, during the work of the Type-C terminal 142, the control unit may control the Type-C terminal 142 to stop working and may simultaneously control the metal terminal 141 to start working if the metal terminal 141 accesses the electric device or the charger. For example, the first control unit 311 outputs the control information to the Type-C protocol handshake unit 33 so that the Type-C protocol handshake unit 33 works normally or stops working, and the Type-C terminal 142 also stops delivering the electrical energy.

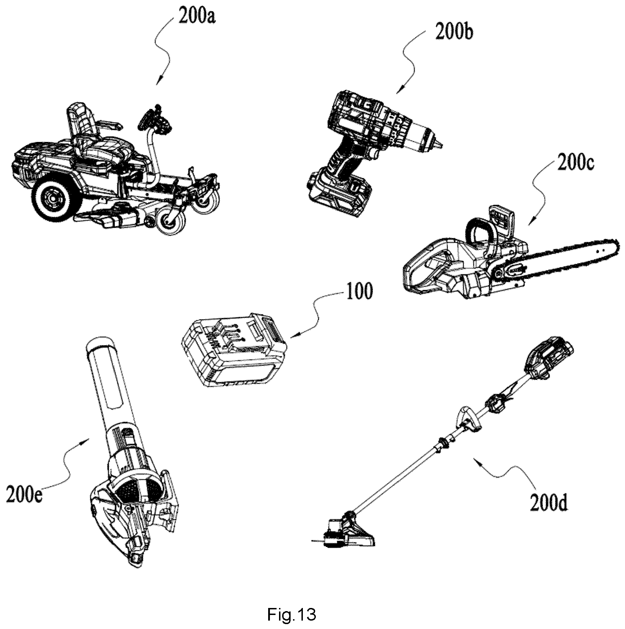

In the examples of the present application, the battery pack, as an energy storage apparatus, can store the electrical energy to power the power tools, other household external devices such as a light, a mosquito-killing device, a fan, a mobile phone, a computer, and other electric devices in daily lives. In this example, various power tools 200 can be powered by the battery pack 100. FIG. 13 illustrates several common power tools, for example, a riding mower 200a, an electric drill 200b, a chain saw 200c, a string trimmer 200d, and a blower 200e. It is to be noted that a power tool 200 may be a handheld power tool, for example, a drill, a pruner, or a sander. Alternatively, the power tool 200 may be a table tool, for example, a table saw or a miter saw. Alternatively, the power tool 200 may be a hand-propelled power tool, for example, a hand-propelled mower or a hand-propelled snow thrower. Alternatively, the power tool 200 may be a riding power tool, for example, a riding mower, a riding vehicle, or an all-terrain vehicle. Alternatively, the power tool 200 may be a robotic tool, for example, a robotic mower or a robotic snow thrower. In some examples, the power tool 200 may be an electric drill, an electric light, an electric vehicle, or the like. In some examples, the power tool 200 may be a garden tool, for example, a pruner, a blower, a mower, or a chain saw. Alternatively, the power tool 200 may be a decoration tool, for example, a screwdriver, a nail gun, a circular saw, or a sander. In some examples, the power tool 200 may be a vegetation care tool, for example, a string trimmer, a mower, a pruner, or a chain saw. Alternatively, the power tool 200 may be a cleaning tool, for example, a blower, a snow thrower, or a cleaning machine. Alternatively, the power tool 200 may be a drilling tool, for example, a drill, a screwdriver, a wrench, or an electric hammer. Alternatively, the power tool 200 may be a sawing tool, for example, a reciprocating saw, a jigsaw, or a circular saw. Alternatively, the power tool 200 may be a table tool, for example, a table saw, a miter saw, a metal cutter, or an electric router. Alternatively, the power tool 200 may be a sanding tool, for example, an angle grinder or a sander. Alternatively, the power tool 200 may be another tool, for example, a light, or a fan.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack (100), comprising:
a housing assembly (11);
a plurality of cells (12) disposed in the housing assembly;
a circuit board (13) disposed in the housing assembly and connected to the plurality of cells; and
at least two electrical terminals (14) connected to the circuit board and configured to be coupled to an apparatus terminal on an external device when the battery pack is connected to the external device;
wherein the at least two electrical terminals comprise a Type-C terminal (142) and a metal terminal (141) fixed on a terminal block (1411);
wherein output power of the Type-C terminal is greater than 65 W, a power device (19) for supplying power to the Type-C terminal is disposed on the circuit board, and the terminal block and the power device are disposed on a same surface of the circuit board.

2. The battery pack according to claim 1, further comprising a locking mechanism (18) configured to be capable of fixing the battery pack on the external device and at least partially located on an upper side of the circuit board.

3. The battery pack according to claim 2, wherein the power device is disposed on a portion of the circuit board between the locking mechanism and the terminal block.

4. The battery pack according to claim 2, wherein the power device is disposed between the locking mechanism and the terminal block.

5. The battery pack according to claim 1, wherein in a left-right direction, a projection of the power device on the circuit board does not exceed a projection of the terminal block on the circuit board.

6. The battery pack according to claim 2, wherein in a left-right direction, a projection of the power device on the circuit board does not exceed a projection of the locking mechanism on the circuit board.

7. The battery pack according to claim 1, wherein the housing assembly comprises an upper housing (111) and a lower housing (112), and a distance from an inner surface of the upper housing facing the power device to the circuit board is greater than or equal to 12 mm and less than or equal to 15 mm.

8. The battery pack according to claim 1, wherein the plurality of cells form a 1P battery cell group, and a height of the battery pack in an up-down direction is less than 48 mm.

9. The battery pack according to claim 1, wherein the plurality of cells form a 2P battery cell groups, and a height of the battery pack in an up-down direction is less than or equal to 67 mm.

10. The battery pack according to claim 1, wherein the plurality of cells form a 3P battery cell groups , and a height of the battery pack in an up and down direction is less than or equal to 85 mm.

11. The battery pack according to claim 2, further comprising: a terminal indicator light (21) disposed on the circuit board and used for indicating a connection state of one of the at least two electrical terminals; and a support element (20) configured to support the locking mechanism, wherein the support element is at least partially exposed outside the housing assembly, and at least part of the support element is a light-transmissive member for directing light of the terminal indicator light outside.

12. The battery pack according to claim 11, wherein the support element is fixed on the housing assembly, and the terminal indicator light is disposed between the circuit board and the support element.

13. The battery pack according to claim 11, wherein the support element is a plastic light-transmissive member.

14. The battery pack according to claim 11, wherein the support element is at least partially exposed on at least one side of the battery pack.

15. The battery pack according to claim 1, further comprising at least one functional accessory (221, 222) detachably connected to the Type-C terminal or the housing assembly.
